# DEMANDE DE BREVET EUROPEEN

(11) **EP 0 650 757 A1**
(43) Date de publication de la demande: **03.05.1995**
(21) Numéro de dépôt: 94402439.7
(22) Date de dépôt: 27.10.1994
(51) Int. Cl.: B01D 53/56, B01D 53/94, B01J 29/04

(54) **Catalyseurs d'élimination des oxydes d'azote en milieu oxydant**

(30) Priorité: 27.10.1993 FR 9312836
(71) Demandeur: Société Anonyme dite: REGIE NATIONALE DES USINES RENAULT, F-92109 Boulogne Billancourt (FR)
(72) Inventeur: Chajjar, Zaharia, F-69100 Villeurbanne (FR); Pommier, Bernard, F-69300 Caluire et Cuire (FR); Praliaud, Hélène, F-69100 Villeurbanne (FR); Primet, Michel, F-69140 Rillieux la Pape (FR)

(57) **Abrégé**

La présente invention est relative à de nouveaux catalyseurs à base de cuivre supporté par un système zéolithique avec un rapport atomique Si/Al > 100. Ces catalyseurs sont avantageusement utilisés pour la réduction sélective des oxydes d'azote par des hydrocarbures en milieu oxydant.

## Description

L'invention concerne les catalyseurs à base de cuivre pour la réduction sélective des oxydes d'azote par des hydrocarbures en milieu oxydant dont le support catalytique est constitué de zéolithes, ainsi que leur procédé de préparation et le procédé de réduction catalytique d'oxyde d'azote mettant en oeuvre ces catalyseurs.

Les gaz d'échappement émis par des moteurs dits "pauvres" contiennent du monoxyde de carbone, des hydrocarbures imbrûlés gazeux ou non, des oxydes d'azote, de la vapeur d'eau, ainsi que d'importantes quantités d'oxygène qui peuvent atteindre 15% en volume.

L'élimination des oxydes d'azote peut être réalisée par décomposition catalytique. Pour cette application, il est connu d'utiliser des catalyseurs à base de métaux nobles à l'état réduit. Cependant, cet état ne peut être préservé en présence d'importantes quantités d'oxygène contenues dans les gaz. La formation de phases ou de couches d'oxygène adsorbé inhibe l'adsorption et la décomposition des oxydes d'azote. L'utilisation d'un agent réducteur s'est donc avérée indispensable pour l'élimination des oxydes d'azote en milieu oxydant. Cet agent doit toutefois être sélectif de la réduction des oxydes d'azote, c'est-à-dire ne pas être prioritairement oxydé par l'oxygène du mélange gazeux.

Récemment, l'utilisation d'hydrocarbure comme le propane et le propène a été proposée pour la réduction sélective des oxydes d'azotes en milieu oxydant. Les catalyseurs mis en oeuvre dans cette réaction utilisent le cuivre comme phase active. Différents supports ont été employés tels que l'alumine, la silice, la zircone.

Plus récemment, des catalyseurs à base de cuivre supporté par des systèmes zéolithiques se sont avérés posséder une bonne activité catalytique dans la réduction sélective des oxydes d'azote en milieu oxydant par le propane. Cette bonne activité catalytique est décrite comme dépendant directement de la présence d'une importante quantité de cuivre et du taux d'échange élevé en cuivre. Des taux pouvant même dépasser les 100% semblent parfois nécessaires à l'obtention d'une activité catalytique suffisante. L'introduction du cuivre pour préparer ces catalyseurs se fait par échange ionique. Il est donc nécessaire d'avoir de nombreux sites d'échange. La quantité de ces sites dépend essentiellement de la quantité d'aluminium présente dans la structure zéolithique; plus la zéolithe est désaluminée, moins elle possède de sites d'échange. Les zéolithes décrites comme support catalytique possèdent un rapport atomique Si/Al < 100, le plus faible possible. Parmi celles-ci, les mordénites et les zéolithes MFI (ZSM-5) présentent la meilleure activité.

Toutefois, ces catalyseurs présentant une meilleure activité catalytique lors de la réduction sélective des oxydes d'azote en milieu oxydant par rapport aux autres catalyseurs de l'état de la technique, ne peuvent être utilisés dans des conditions de fonctionnement réelles. Ces catalyseurs sont en effet peu stables thermiquement et très sensibles à l'eau. Or, les gaz d'échappement des moteurs peuvent atteindre des températures de plus de 700°C et contiennent au minimum 10% d'eau. Les catalyseurs à base de cuivre supportés par des zéolithes de rapport atomique Si/Al < 100 se désactivent presque totalement au bout de quelques heures seulement de fonctionnement dans des conditions réelles.

La demanderesse a découvert de façon surprenante, ce qui fait l'objet de l'invention, de nouveaux catalyseurs à base de cuivre utilisables pour la réduction sélective d'oxydes d'azote par des hydrocarbures en milieu oxydant, dont le support catalytique est constitué par un système zéolithique avec un rapport atomique Si/Al > 100. Ces nouveaux catalyseurs présentent dans cette application une bonne activité catalytique stable dans le temps. Ils sont résistants au vieillissement thermique en présence d'eau et peuvent donc être utilisés dans des conditions de fonctionnement réelles.

L'invention a donc pour objet de nouveaux catalyseurs à base de cuivre dont le support est constitué d'un système zéolithique avec un rapport atomique Si/Al > 100.

L'invention a également pour objet un procédé de préparation de ces catalyseurs, ainsi que l'utilisation de zéolithes de rapport atomique Si/Al > 100 comme support de catalyseur à base de cuivre pour la réduction sélective d'oxydes d'azote par des hydrocarbures en milieu oxydant.

Un autre objet de l'invention consiste en un procédé de réduction sélective d'oxydes d'azote par des hydrocarbures en milieu oxydant en présence d'un catalyseur à base de cuivre supporté par un système zéolithique avec un rapport atomique Si/Al > 100.

D'autres objets de l'invention apparaîtront plus clairement à la lecture de la description, des exemples et des figures qui suivent.

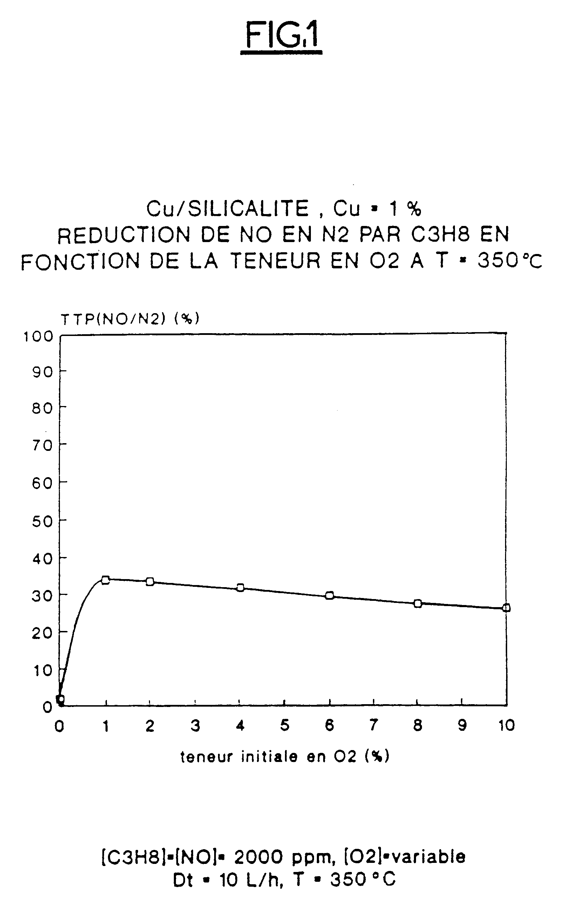

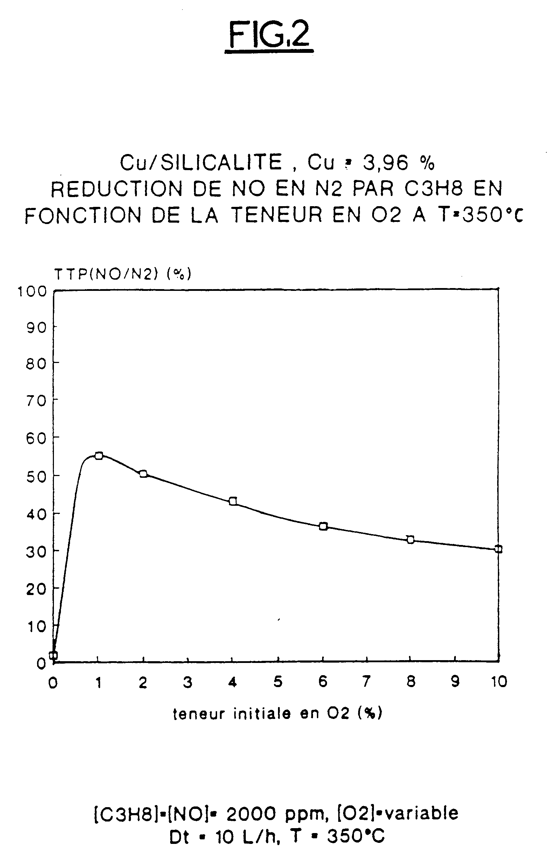

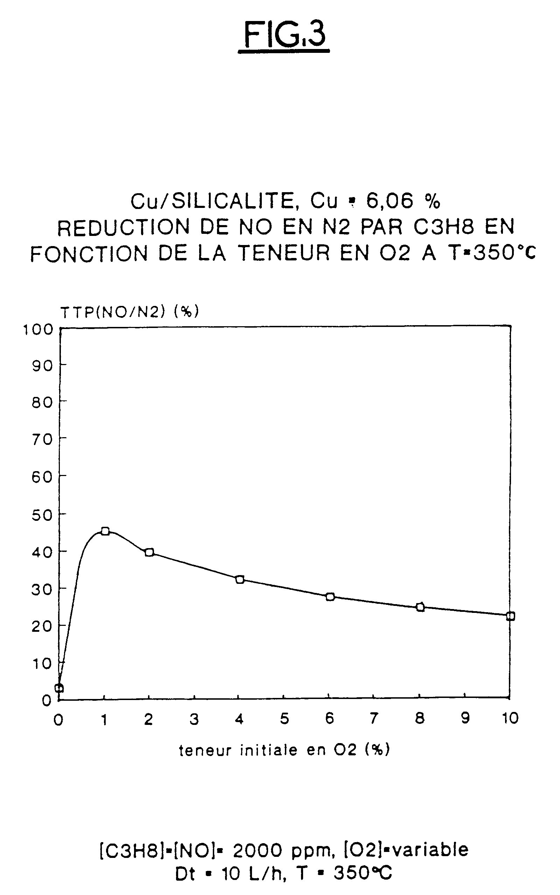

Les figures 1, 2 et 3 représentent des courbes d'évolution de la conversion du monoxyde d'azote en fonction de la teneur en oxygène,

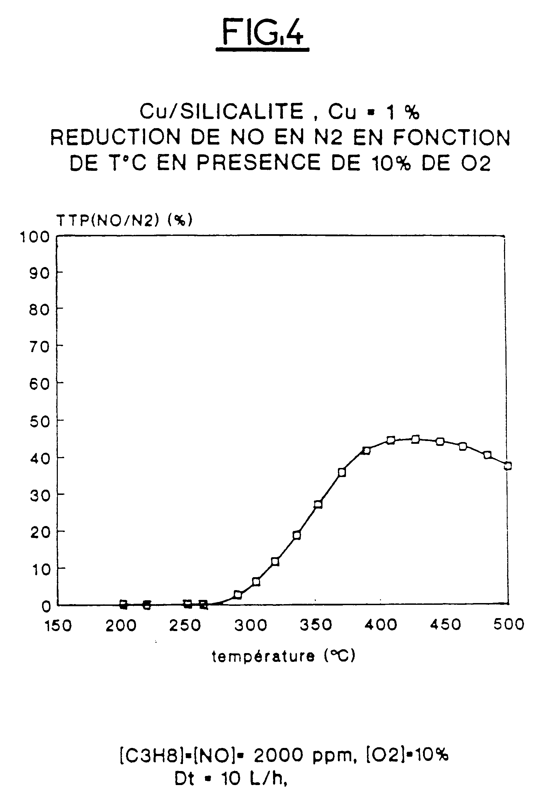

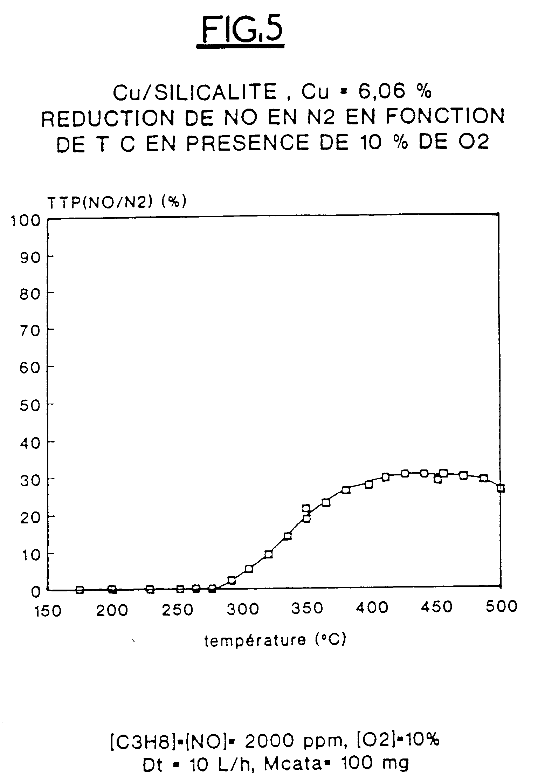

les figures 4 et 5 représentent des courbes d'évolution de la conversion du monoxyde d'azote en fonction de la température, et
la figure 6 représente une courbe d'évolution de la conversion du monoxyde d'azote en fonction du temps.

Conformément à l'invention, le nouveau catalyseur à base de cuivre contient comme support catalytique un système zéolithique avec un rapport atomique Si/Al > 100 et pouvant atteindre des valeurs supérieures à 500. Parmi les zéolithes répondant à cette définition, on citera de préférence la silicalite qui est une zéolithe présentant une structure MFI fortement désaluminée.

Dans une mise en oeuvre préférée de l'invention, le catalyseur contient une phase active de cuivre hautement dispersée dans le système zéolithique.

La phase active de cuivre est introduite dans le système zéolithique selon l'invention par imprégnation dudit système zéolithique par une solution aqueuse d'un sel ou mélange de sel de cuivre. L'activité catalytique du catalyseur dépend de la quantité et de la dispersion du cuivre introduit. Plus ces dernières sont grandes, plus importante est l'activité catalytique.

Un autre objet de l'invention est constitué par le procédé de préparation du catalyseur décrit ci-dessus. Ce procédé consiste en un premier temps à imprégner le système de zéolithes ayant des rapports atomiques Si/Al > 100, par une solution aqueuse d'un sel ou mélange de sel de cuivre. On utilisera de préférence une solution aqueuse de nitrate de cuivre. On évapore ensuite l'eau à l'évaporateur rotatif et on sèche le solide ainsi obtenu à 110°C à l'étuve sous air pendant environ 12 heures. Le solide séché est ensuite calciné à 500°C sous un flux d'oxygène pendant environ 8 heures. On utilisera de préférence de la silicalite comme système zéolithique.

Les catalyseurs ainsi préparés présentent une dispersion du cuivre dans le système zéolithique suffisamment grande.

Les catalyseurs conformes à l'invention peuvent être avantageusement utilisés pour la réduction sélective d'oxyde d'azote par des hydrocarbures en milieu oxydant.

Un objet de l'invention est constitué par le procédé de réduction d'oxyde d'azote en présence d'un tel catalyseur. Ce procédé consiste à réduire sélectivement des oxydes d'azote contenus dans un mélange gazeux ayant une teneur en oxygène comprise entre 0,5 et 20% en volume, par des hydrocarbures à une température comprise entre 150 et 700°C en présence d'un catalyseur tel que défini précédemment. On préfèrera utiliser le propane comme réducteur sélectif des oxydes d'azote.

Le mélange gazeux peut également contenir de la vapeur d'eau.

Comme oxydes d'azote avantageusement réduits par le procédé ci-dessus, on peut citer plus particulièrement le monoxyde d'azote.

Selon un mode préférentiel d'application, on réduit sélectivement du monoxyde d'azote par du propane en milieu oxydant à teneur en oxygène comprise entre 1 et 10% en volume, à une température comprise entre 300 et 500°C en présence d'un catalyseur à base de cuivre supporté par de la silicalite.

Les exemples qui suivent illustrent la présente invention sans toutefois la limiter.

### EXEMPLE DE PREPARATION

Dans l'exemple qui suit, le système zéolithique avec un rapport atomique Si/Al > 100 est une silicalite contenant 0,34% d'aluminium avec un rapport atomique Si/Al = 131, commercialisé par UNION CARBIDE CORP, Molecular Sieves Products, Type S-115; AMT : 1, 1b, Lot 9959-58.

Cette silicalite est imprégnée par une solution aqueuse de nitrate de cuivre. Après évaporation de l'eau à l'évaporateur rotatif, le solide obtenu est séché à 110°C à l'étuve sous air pendant la nuit, puis calciné à 500°C sous un flux d'oxygène pendant 8 heures.

Trois solides sont ainsi préparés :
a) Solide Cu-Silicalite à 1% en poids de cuivre,
b) Solide Cu-Silicalite à 3,96% en poids de cuivre,
c) Solide Cu-Silicalite à 6,06% en poids de cuivre.

### EXEMPLES D'APPLICATION

Pour les exemples qui suivent, on a effectué une réduction sélective du monoxyde d'azote par le propane en milieu oxydant en utilisant les catalyseurs a), b) et c) obtenus précédemment. On a déterminé le taux de conversion partielle de NO en N₂ à 350°C en fonction de la teneur en oxygène, ainsi qu'à une teneur en oxygène de 10% en volume en fonction de la température.

### I. CONDITIONS OPERATOIRES

**1-Composition du mélange réactionnel**
   [NO] = 2000 vpm
   [C₃H₈] = 2000 vpm
   [O₂] = de 0 à 10% (en volume)
   He = complément.
**2-Domaine de température**
   De 150°C à 500°C.
**3-Masse de catalyseur**
   100 mg.
**4-Masse de diluant thermique**
   400 mg de α-Al₂O₃.
**5-Débit total du mélange réactionnel**
   10 l h⁻¹, soit une vitesse spatiale horaire VVH de l'ordre de 200 000 h⁻¹ par rapport à la masse du catalyseur (100 mg).
**6-Réacteur**
   Tube en U, en quartz, de 14 mm de diamètre intérieur contenant un fritté également en quartz servant de support au lit catalytique. Il s'agit d'un réacteur à lit fixe, traversé par les réactifs.
**7-Analyses**
   On détermine les quantités de réactifs disparus (NO, C₃H₈, O₂) et celle des produits formés (CO, CO₂, N₂, NO₂, N₂O). N₂, O₂, CO, N₂O, CO₂ sont analysés par chromatographie en phase gazeuse : séparation à l'aide de deux colonnes (Porapak et tamis moléculaire) et détection par catharométrie. C₃H₈ est analysé aussi par chromatographie avec une colonne Porapak et un détecteur à ionisation de flamme. Des injections sont effectuées toutes les 13 minutes. NO et NO₂ sont dosés en ligne en utilisant deux détecteurs infrarouges spécifiques à chaque oxyde d'azote.

### II. PROTOCOLE OPERATOIRE

La séquence suivante de mesures est réalisée pour tous les catalyseurs :
**1-Prétraitement en l'absence d'oxygène :**
   Le lit catalytique est traversé par le mélange réactionnel exempt d'oxygène. On effectue une montée de température de l'ambiante jusqu'à 500°C avec une rampe de température de 4°C/min. de manière à standardiser le catalyseur et à s'affranchir des modifications du solide sous le mélange réactionnel et à aboutir à des mesures d'activité catalytique reproductibles. Cette montée est suivie d'une descente de température de 500°C à 150°C avec une rampe de 2°C/min. L'activité est mesurée au cours de cette descente de température.
**2-Test d'activité en présence d'oxygène :**
   L'activité est mesurée selon le protocole ci-dessous réalisé en deux étapes :
   a) - Après le prétraitement en l'absence d'oxygène, la conversion de NO en N₂ est suivie en fonction de la teneur initiale en oxygène, pour une température donnée, généralement 350°C.
   b) - La température est ensuite abaissée à 150°C et une teneur donnée d'oxygène, en général 10%, est introduite. Entre 150 et 500°C, un cycle montée/descente de température est réalisé avec les mêmes rampes que lors du prétraitement. La conversion de NO en azote en présence d'oxygène est donc mesurée en fonction de la température.

### III. REMARQUES

Le taux de transformation partiel de NO en N₂ (TTP (NO/N₂)) est calculé à partir du taux de transformation global de NO (TTG (NO)) corrigé du taux de transformation partiel de NO en NO₂ (TTP (NO/NO₂)). Il correspond au taux de transformation déduit de l'analyse de la quantité d'azote formé.

Toutes les courbes représentatives de la conversion de NO en azote en fonction de la température sont relatives aux conversions mesurées lors de la descente de température.

### IV. RESULTATS

Les figures et les tableaux 1, 2 et 3 donnent l'évolution de la conversion de NO en azote à 350°C en fonction de la teneur initiale en oxygène. Il existe une exhaltation d'activité due à la présence d'oxygène. En effet, pour les trois solides testés, la conversion présente un maximum avec la teneur en oxygène au voisinage de 1% en volume. Une conversion importante est maintenue en présence de 10 vol.% d'oxygène pour les trois solides.

Les figures et les tableaux 4 et 5 fournissent la conversion de NO en azote en fonction de la température en présence de 10% d'oxygène dans le cas des solides a) et c). On observe des maximas de conversion pour les deux solides dans la région située entre 400 et 500°C.

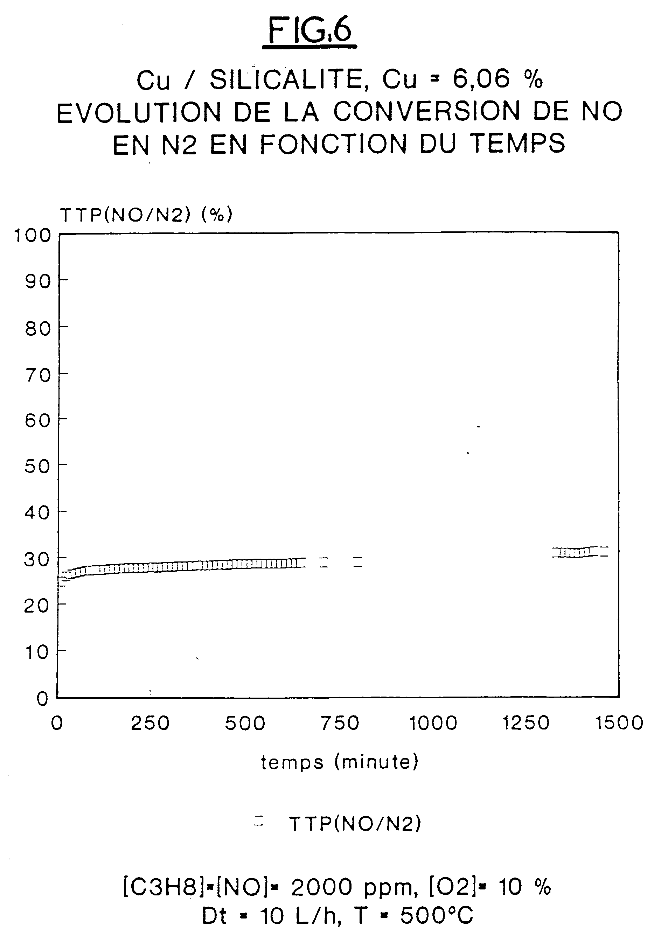

La figure 6 montre l'évolution de la conversion de NO en azote en fonction du temps en présence de 10% d'oxygène à 500°C pour le solide c) contenant 6,06% de cuivre. On constate une stabilité de la conversion dans le temps, voire même une augmentation après 24 heures de test puisqu'elle passe de 25% à 31%.

### Conversions en fonction de la teneur en oxygène

**Tableau 1 Cu-Silicalite, Cu = 1%**

| TEST EN PRESENCE DE O2 A T = 350°C | | | | | | |
|---|---|---|---|---|---|---|
| teneur initiale de O2 (%) | TTG(NO) (%) | TTP(NO/NO2) (%) | TTP(NO/N2) (%) | TTG(C3H8) (%) | TTP(C3H8/CO2) (%) | TTG(02) (%) |
| 0 | 1,7 | 0 | 1,7 | 0 | 0 | |
| 1 | 36,1 | 3,3 | 33,6 | 22,4 | 24,2 | 7,63 |
| 2 | 38,9 | 4,9 | 33,2 | 28,6 | 26,3 | 10,95 |
| 4 | 39,8 | 8,5 | 31,3 | 32,5 | 31,1 | 11,03 |
| 6 | 41,8 | 12,5 | 29,3 | 37,5 | 33,3 | 7,8 |
| 8 | 43,6 | 16,5 | 27,1 | 35,8 | 34,7 | 6,23 |
| 10 | 46 | 20 | 26 | 36,8 | 35,4 | 5,35 |

**Tableau 2 Cu-Silicalite, Cu = 3,96%**

| TEST EN PRESENCE DE O2 A T = 350°C | | | | | | |
|---|---|---|---|---|---|---|
| teneur initiale de O2 (%) | TTG(NO) (%) | TTP(NO/NO2) (%) | TTP(NO/N2) (%) | TTG(C3H8) (%) | TTP(C3H8/CO2) (%) | TTG(02) (%) |
| 0 | 1,7 | 0 | 1,7 | 1,9 | 0 | |
| 1 | 56,6 | 1,5 | 55,1 | 57,5 | 50,1 | 19 |
| 2 | 53,7 | 3,6 | 50,1 | 59,3 | 58,7 | 23,62 |
| 4 | 51,3 | 8,6 | 42,7 | 62,5 | 61,2 | 14,64 |
| 6 | 50,4 | 14,4 | 36 | 61,5 | 59,6 | 7,85 |
| 8 | 51,2 | 18,7 | 32,5 | 61,6 | 59,8 | 4,61 |
| 10 | 52,6 | 22,7 | 29,9 | 60,7 | 59,4 | 3,30 |

**Tableau 3 Cu-Silicalite, Cu = 6,06%**

| TEST EN PRESENCE DE O2 A T = 350°C | | | | | | |
|---|---|---|---|---|---|---|
| teneur initiale de O2 (%) | TTG(NO) (%) | TTP(NO/NO2) (%) | TTP(NO/N2) (%) | TTG(C3H8) (%) | TTP(C3H8/CO2) (%) | TTG(02) (%) |
| 0 | 3 | 0 | 3 | 0 | 0 | |
| 1 | 47,4 | 2,2 | 45,2 | 15,1 | 17,7 | 33,18 |
| 2 | 45,3 | 5,9 | 39,4 | 50,8 | 46,9 | 21,53 |
| 4 | 44,3 | 12,3 | 32 | 51 | 47,4 | 14,2 |
| 6 | 45,5 | 18,2 | 27,3 | 50,3 | 47 | 8,7 |
| 8 | 47,3 | 23 | 24,3 | 49,6 | 46,5 | 6,6 |
| 10 | 48,9 | 27 | 21,9 | 49 | 45,9 | 5,16 |

**Tableau 4**

| CONVERSIONS EN FONCTION DE LA TEMPERATURE | | | | | | |
|---|---|---|---|---|---|---|
| température (°C) | TTG(NO) (%) | TTP(NO/NO2) (%) | TTP(NO/N2) (%) | TTG(C3H8) (%) | TTP(C3H8/CO2) (%) | TTG(O2) (%) |
| 500 | 58.3 | 20.9 | 37.4 | 99.9 | 100 | 10.06 |
| 484 | 60.7 | 20.4 | 40.3 | 99.6 | 98.1 | 10.11 |
| 465 | 62 | 19.4 | 42.6 | 98.7 | 97.8 | 10.01 |
| 447 | 61.5 | 17.5 | 44 | 95.6 | 96.9 | 9.68 |
| 428 | 59.9 | 15.3 | 44.6 | 88.3 | 92.1 | 9.23 |
| 409 | 58.2 | 13.8 | 44.4 | 75.4 | 82.4 | 8.35 |
| 390 | 55.4 | 13.9 | 41.5 | 57.9 | 67.8 | 7.05 |
| 371 | 51.2 | 15.7 | 35.5 | 39.6 | 49.7 | 5.38 |
| 353 | 46 | 18.9 | 27 | 24.2 | 32.3 | 3.75 |
| 336 | 41.7 | 23.2 | 18.5 | 13.3 | 18.9 | 2.68 |
| 319 | 39 | 27.5 | 11.5 | 6.9 | 10 | 2.08 |
| 304 | 37.3 | 31.1 | 6.2 | 3.4 | 5.2 | 1.85 |
| 290 | 36.2 | 33.6 | 2.6 | 1.5 | 2.5 | 1.42 |
| 264 | 34.7 | 36.1 | 0 | 0 | 0.8 | 1.34 |
| 252 | 34.1 | 36.6 | 0 | 0 | 0 | 1.33 |
| 220 | 33.4 | 37.3 | 0 | 0 | 0 | 1.35 |
| 202 | 33.4 | 37.7 | 0 | 0 | 0 | 1.35 |

Cu-Silicalite, Cu = 1 %

**Tableau 5**

| CONVERSIONS EN FONCTION DE LA TEMPERATURE | | | | | | |
|---|---|---|---|---|---|---|
| température (°C) | TTG(NO) (%) | TTP(NO/NO2) (%) | TTP(NO/N2) (%) | TTG(C3H8) (%) | TTP(C3H8/CO2) (%) | TTG(O2) (%) |
| 500 | 51 | 23 | 26 | 99 | 95 | 10.3 |
| 487 | 51 | 23 | 29 | 96 | 93 | 9.76 |
| 471 | 52 | 22 | 30 | 93 | 91 | 9.66 |
| 456 | 52 | 21 | 30 | 90 | 89 | 9.34 |
| 441 | 51 | 21 | 30 | 84 | 84 | 8.77 |
| 426 | 51 | 20 | 30 | 78 | 78 | 8.39 |
| 411 | 50 | 20 | 29 | 70 | 71 | 7.54 |
| 380 | 47 | 21 | 26 | 48 | 53 | 5.17 |
| 365 | 45 | 23 | 23 | 36 | 41 | 4.4 |
| 350 | 43 | 25 | 18 | 24 | 29 | 3.02 |
| 335 | 42 | 28 | 14 | 15 | 19 | 2.29 |
| 320 | 40 | 31 | 9 | 9 | 11 | 1.44 |
| 305 | 39 | 34 | 5 | 5 | 7 | 1.00 |
| 291 | 37 | 35 | 2 | 3 | 4 | 0.65 |
| 277 | 36 | 36 | 0 | 2 | 2 | 0 |
| 264 | 37 | 37 | 0 | 1 | 1 | 0.4 |
| 252 | 37 | 37 | 0 | 1 | 0 | 0.38 |
| 229 | 37 | 37 | 0 | 0 | 0 | 0.53 |
| 200 | 38 | 38 | 0 | 0 | 0 | 0.49 |
| 175 | 38 | 38 | 0 | 0 | 0 | 0.38 |

Cu-Silicalite, Cu = 6,06 %

## Revendications

1. Catalyseur à base de cuivre supporté par un système zéolithique ayant un rapport atomique Si/Al > 100, caractérisé en ce que la phase active de cuivre est introduite dans le système zéolithique par imprégnation dudit système par une solution aqueuse d'un sel ou mélange de sel de cuivre.

2. Catalyseur selon la revendication 1, caractérisé en ce que le système zéolithique est constitué par de la silicalite.

3. Catalyseur selon la revendication 1 ou 2, caractérisé en ce qu'il contient une phase active de cuivre hautement dispersée dans le système zéolithique.

4. Procédé de préparation d'un catalyseur à base de cuivre supporté par un système zéolithique avec un rapport atomique Si/Al > 100, caractérisé en ce qu'il consiste tout d'abord à imprégner le système zéolithique par une solution aqueuse d'un sel ou d'un mélange de sel de cuivre, puis à évaporer l'eau; on sèche ensuite le solide obtenu à l'étuve à 110°C sous air pendant environ 12 heures; le solide ainsi séché est enfin calciné à 500°C sous un flux d'oxygène pendant environ 8 heures.

5. Procédé selon la revendication 4, caractérisé en ce que la solution aqueuse de sel de cuivre est une solution de nitrate de cuivre.

6. Utilisation d'un catalyseur à base de cuivre supporté par un système zéolithique avec un rapport atomique Si/Al > 100 obtenu par imprégnation dudit système par une solution d'un sel ou mélange de sels de cuivre, pour la réduction sélective d'oxydes d'azote par des hydrocarbures en milieu oxydant.

7. Procédé de réduction sélective d'oxydes d'azote par des hydrocarbures en milieu oxydant, caractérisé en ce qu'il consiste à réduire sélectivement des oxydes d'azote contenus dans un mélange gazeux ayant une teneur en oxygène comprise entre 0,5 et 20% en volume par des hydrocarbures à une température comprise entre 150 et 700°C en présence d'un catalyseur à base de cuivre supporté par un système zéolithique avec un rapport atomique Si/Al > 100 obtenu par imprégnation dudit système par une solution d'un sel ou mélange de sels de cuivre.

8. Procédé selon la revendication 7, caractérisé en ce que le système zéolithique est constitué par de la silicalite.

9. Procédé selon la revendication 7 ou 8, caractérisé en ce que l'hydrocarbure est le propane.

10. Procédé selon l'une quelconque des revendications 7 à 9, caractérisé en ce que l'on réduit sélectivement du monoxyde d'azote par du propane en milieu oxydant à teneur en oxygène comprise entre 1 et 10% en volume à une température comprise entre 300 et 500°C en présence d'un catalyseur à base de cuivre supporté par de la silicalite.
